# FASCICULE DE BREVET EUROPEEN

(11) **EP 2 077 402 B1**
(45) Date de publication et mention de la délivrance du brevet: **15.02.2012**
(21) Numéro de dépôt: 08291233.8
(22) Date de dépôt: 23.12.2008
(51) Int. Cl.: F16F 9/00

(54) **Amortisseur de vibrations notamment pour structure aerospatiale**
Schwingungsdämpfer, insbesondere für Luft- und Raumfahrtstruktur
Vibration damper, in particular for an aerospatial structure

(30) Priorité: 03.01.2008 FR 0800036
(43) Date de publication de la demande: 08.07.2009
(73) Titulaire: Hutchinson S.a., 75800 Paris (FR)
(72) Inventeur: Gelbard, Carole, 92700 Colombes (FR); Buffin, Thibaut, 92300 Levallois-Perret (FR)
(74) Mandataire: Jacquard, Philippe Jean-Luc

(56) Documents cités:
- FR-A- 2 212 012
- US-A- 2 841 388
- US-A- 3 243 154
- US-A- 3 250 502

## Description

La présente invention a pour objet un amortisseur de vibrations, notamment pour structure aérospatiale. Un amortisseur selon le préambule de la revendication 1 est connu du document FR 2. 212 .012 A.

On connaît déjà des amortisseurs entièrement métalliques, mais ils ne présentent pas un amortissement suffisant, ou bien il n'est pas possible d'avoir une raideur élevée dans un faible volume.

On connaît également des amortisseurs en élastomère, mais d'une part, ils ne présentent pas un amortissement suffisant et d'autre part, il n'est pas possible d'obtenir une raideur élevée dans un faible encombrement, et de plus, ils sont sensibles à la température.

On connaît encore des amortisseurs combinant ressort et hydraulique, mais il n'est pas possible d'obtenir une raideur élevée dans un faible volume.

Enfin, ces systèmes ne permettent pas tous un réglage indépendant de la raideur et de l'amortissement.

L'invention concerne ainsi un amortisseur de vibrations ne présentant pas au moins un des inconvénients énumérés ci-dessus.

L'invention concerne ainsi un amortisseur de vibrations comportant :
- un boîtier délimitant une chambre annulaire
- un piston présentant une couronne centrale coulissant dans la chambre annulaire. Cette chambre annulaire a un contour externe de diamètre supérieur ou sensiblement égal au diamètre extérieur de la couronne centrale de sorte qu'elle soit séparée en un premier et un deuxième compartiments,
- deux éléments d'assemblage disposés aux extrémités opposées du piston, un premier élément d'assemblage étant solidaire du boîtier et un deuxième élément d'assemblage étant solidaire du piston.
- Ledits compartiments étant remplis chacun par au moins un coussin métallique en fil tricoté, ces éléments constituant les éléments d'amortissement de l'amortisseur
- un fluide d'amortissement remplissant la chambre annulaire, y compris les interstices entre les mailles des coussins métalliques.

La couronne centrale présente au moins un trou traversant et/ou un jeu à sa périphérie pour le passage du fluide d'amortissement lors des mouvements axiaux du piston.

La raideur de l'amortisseur est assurée par les coussins métalliques, alors que l'amortissement est majoritairement obtenu par dissipation d'énergie du fluide passant d'une part à travers les mailles du fil tricoté des coussins métalliques, et d'autre part par le jeu entre la couronne centrale du piston et le contour externe de la chambre annulaire et/ou le ou les trous traversant la couronne centrale du piston.

Le ou les éléments d'assemblage peuvent être une rotule, notamment métallique ou lamifiée élastomère/métal.

Les coussins métalliques ont avantageusement, à l'état libre, un diamètre intérieur d compris entre 10 mm et 25 mm, un diamètre extérieur D compris entre 30 mm et 50 mm et une hauteur H comprise entre 10 mm et 20 mm.

Avantageusement, les coussins métalliques sont précontraints axialement, notamment avec une précontrainte ΔH/H, ΔH désignant l'écrasement du coussin dû à la précontrainte, qui est comprise entre 10 % et 50 %.

La densité des coussins métalliques est avantageusement comprise entre 0,2 et 3.

De préférence, l'amortisseur comporte au moins une chambre de compensation assurant d'une part une compensation de la contraction et de la dilatation du fluide, respectivement à froid et à chaud, et d'autre part une pressurisation du fluide à l'aide d'un élément élastique.

D'autres caractéristiques et avantages de l'invention apparaîtront mieux à la lecture de la description ci-après, en liaison avec les dessins dans lesquels :
- la figure 1a est un schéma d'ensemble en coupe axiale, d'un amortisseur destiné à une application aérospatiale, la figure 1b étant une coupe BB de la figure 1a, montrant les chambres de compensation,
- la figure 2a représente un coussin métallique en coupe axiale, et la figure 2b une courbe de raideur type d'un coussin métallique sous charge axiale,
- la figure 3 illustre la circulation du fluide dans l'amortisseur.
- les figures 4a à 4c illustrent le fonctionnement du dispositif dans trois positions, respectivement en position équilibrée au montage (figure 4a), en position en butée à droite (figure 4b), et en position en butée à gauche (figure 4c).

L'invention concerne un amortisseur pouvant équiper toute structure ou équipement devant être protégé contre les vibrations. L'amortisseur est monté sur une structure aérospatiale, mais peut être appliquée à un rotor d'hélicoptère, un moteur de véhicule automobile, une machine vibrante, etc.

Plus particulièrement, il s'agit d'une liaison mécanique à comportement élastique et dissipatif dont l'amortissement et la raideur peuvent être réglés indépendamment. La technique utilisée allie coussin(s) métallique(s) et amortissement fluide.

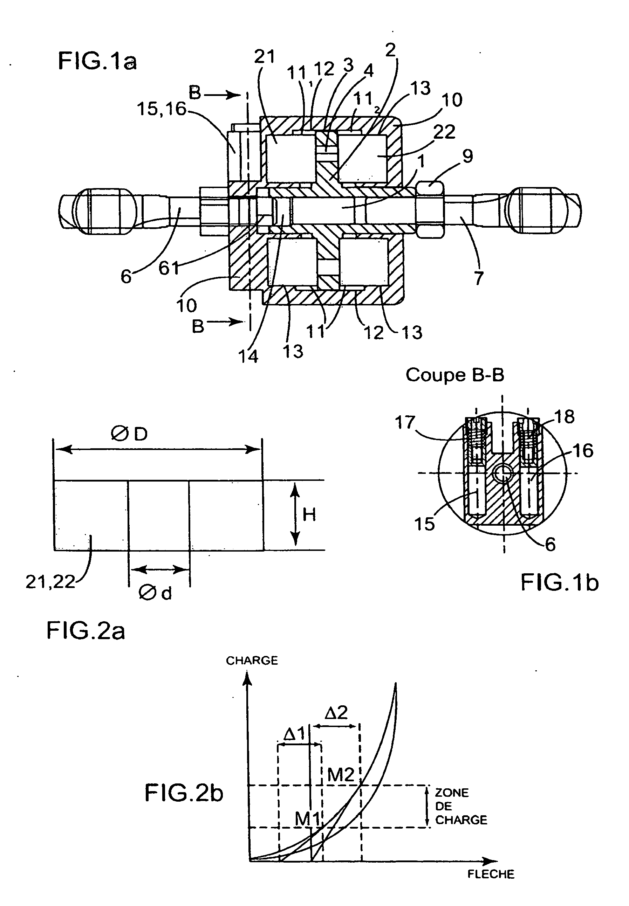

L'amortisseur représenté à titre d'exemple à la figure 1a présente un piston 1 pourvu d'une couronne centrale 2 ayant un contour externe 3 de diamètre D₀ coulissant éventuellement avec jeu dans le contour externe 12 d'une chambre annulaire 11 d'un boîtier 10 dans lequel coulisse le piston 1, de sorte que la chambre annulaire 11 est séparée en un premier 11₁ et un deuxième 11₂ compartiment. Le contour externe de la chambre annulaire présente ici un premier contour externe cylindrique 13 de diamètre sensiblement égal à D pour loger des coussins métalliques 21 et 22, et le contour externe cylindrique 12 de diamètre D₀ pour permettre le coulissement du contour externe de la couronne centrale 2, éventuellement avec un jeu calibré permettant un amortissement par passage du fluide.

La figure 1b montre deux chambres de compensation 15 et 16 situées de part et d'autre de la rotule 6, et pourvues de dispositifs de mise en pression 17 et 18 à ressort. On notera qu'il est possible de prévoir un dispositif de compensation dans un espace de la chambre annulaire 11.

Des boulons 8 et 9 servent à la fixation des rotules gauche 6 et droite 7.

La rotule gauche 6 est fixée par le boulon 8 sur le boîtier 10, alors que la rotule droite 7 est solidarisée du piston 1 à laquelle elle est fixée, grâce au boulon 9. L'extrémité cylindrique 61 de la rotule gauche 6 coulisse dans une ouverture cylindrique 14 du piston 1.

La fonction raideur (force de rappel) est assurée par les coussins métalliques 21 et 22, alors que l'amortissement est obtenu par dissipation d'énergie obtenue pour l'essentiel par le passage du fluide à travers les mailles des coussins métalliques 21 et 22.

La précontrainte axiale ΔH/H est comprise par exemple entre 10 % et 50 %.

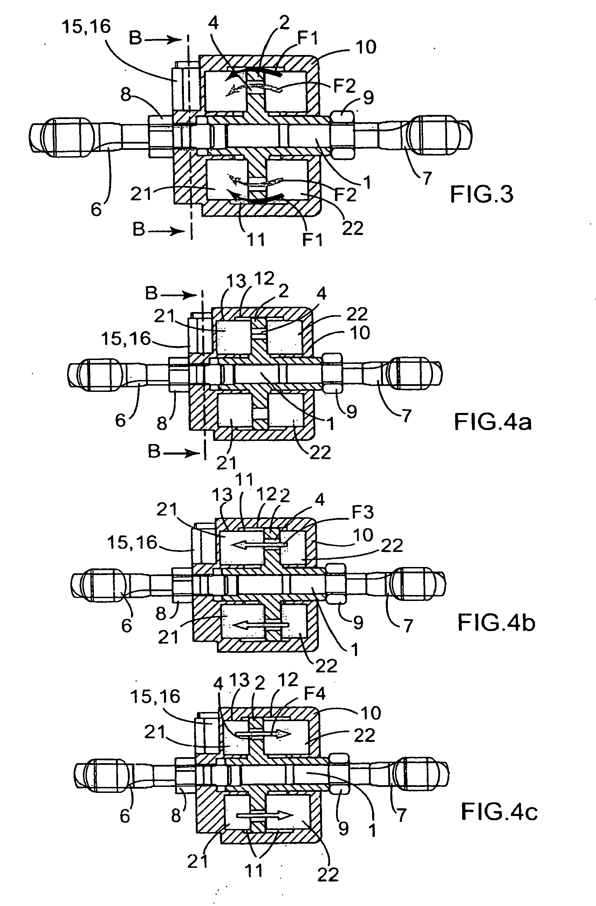

La figure 3 illustre la circulation du fluide dans l'amortisseur lors d'un déplacement axial du piston 1 :
- par les trous débouchants 4 de la couronne centrale 2 du piston 1 (flèches F₂)
- et/ou par le jeu externe entre la couronne centrale 2 et le boîtier 10 (flèches F₁).

L'amortisseur de vibrations présente plusieurs fonctions :
- L'assemblage sur la structure à amortir est réalisé par 2 rotules 6, 7 qui peuvent être soit des rotules sèches (métalliques) soit des rotules élastiques (caoutchouc / métal).

La mise en oeuvre d'une rotule lamifiée caoutchouc / métal permet d'éliminer l'endommagement par contact métal/métal. L'endommagement éventuel des rotules lamifiées est d'autre part plus facilement détectable et mesurable.
- La fonction raideur du système amortisseur est localisée dans le boîtier 10 entre les deux rotules 6 et 7. Elle est obtenue par un assemblage de coussins métalliques 21 et 22 montés en opposition et précontraints de part de d'autre de la couronne centrale 2 du piston 1 qui coulisse dans un boîtier 10.

Les coussins métalliques 21 et 22 sont constitués d'un fil inoxydable tricoté, gaufré, puis formé sous presse. Ils permettent notamment d'intégrer un effet de butée progressive du à l'augmentation de la raideur statique en fonction de son écrasement. Le fil présente une insensibilité aux températures (-70°C à +300°C pour un fil en acier inox et jusqu'à +650°C pour un fil inox réfractaire) et aux produits chimiques. Il permet d'introduire une forte raideur dans un encombrement réduit.

Le fil a un diamètre compris par exemple entre 0,05 mm et 0,4 mm.

La densité d'un coussin métallique est par exemple comprise entre 0,2 et 3.

Les formes des coussins métalliques sont diverses. Dans le concept présenté, des coussins métalliques 21 et 22 de forme annulaire sont utilisés. La courbe de raideur type d'un tel coussin métallique se présente généralement comme à la figure 2b. Elle est fortement non linéaire. M1 désigne la charge correspondant à la précontrainte, et M2 la charge correspondant à la sollicitation maximale.

Pour l'application envisagée, la raideur apportée par les coussins métalliques varie de 0 (coussin à l'état non précontraint) à environ 10 000 N/mm (charge maximale). La plage de débattement dynamique est par exemple 0 - 2 mm de part et d'autre de la position de repos.
- La fonction dissipation d'énergie du système amortisseur est réalisée :
   . par passage du fluide à travers les mailles des coussins métalliques 21 et 22.
   . par passage du fluide à travers les trous 4 de la couronne 2 du piston central 1.
   . par frottement des fibres des coussins métalliques 21 et 22 les unes contre les autres.
   . par frottement des fibres des coussins métalliques 21 et 22 sur le boîtier 10 et le piston 1.

L'amortissement d'un coussin métallique seul (facteur de perte tan δ) est de l'ordre de 10 à 30 % en fonction de ses paramètres de fabrication et de son confinement après intégration. Le fluide circulant à travers les mailles des coussins métalliques 21 et 22 et les trous 4 du piston central lors du mouvement permet d'introduire une perte de charge importante et d'augmenter cet amortissement.

Dans l'application envisagée, entre 0 et 50 Hz, et pour des amplitudes comprises entre ± 0,2 et ± 2 mm, le facteur de perte tan(δ) varie entre 0,5 et 2.

L'amortisseur présente ainsi des coussins métalliques baignant dans un fluide, qui peut être de l'huile silicone, de l'eau glycolée ou tout autre fluide compatible avec les conditions d'utilisation du système amortisseur. La densité du coussin métallique et la viscosité du fluide peuvent être ajustées en fonction des performances d'amortissement à atteindre et des compatibilités à chaud et à froid.

Le fluide occupe tout le volume de la chambre constituant le système amortisseur :
Interstices entre les coussins métalliques 21 et 22 et le piston 1
. Interstices entre les coussins métalliques 21 et 22 et le boîtier 10
. Interstices entre les mailles des coussins métalliques 21 et 22
. Trous 4 du piston central 1
. Chambres de compensation 15 et 16.

Le piston 1 qui permet le mouvement et donc le passage du fluide d'un compartiment à l'autre 11₁ et 11₂, comporte des perçages 4 permettant au fluide de circuler d'un compartiment à l'autre.

Cette circulation peut aussi être réalisée en créant un cylindre de passage entre le contour extérieur 3 de la couronne centrale 2 du piston et le diamètre intérieur 12 de la cavité 11 du boîtier 10.

On notera que le facteur de perte et la raideur du système dépendent:
- de la fréquence,
- de l'amplitude dynamique,
- de la raideur du coussin métallique.
- de la viscosité du fluide (dans l'application envisagée : 0 à 10 000 CTS)
- de la température d'utilisation (dans l'application envisagée: -50°C à 200°C).

Un système de compensation et de pressurisation 15, 16 permet de faire fonctionner l'amortisseur sur une grande plage de température avec la même efficacité.

Le système de compensation est constitué dans le cas présent de 2 chambres 15 et 16 reliées entre elles, et communiquant avec la chambre intérieure 11 du boîtier 10. Le volume à compenser est fonction du volume de fluide dans l'amortisseur, de la plage de température d'utilisation, et du coefficient de dilatation du fluide. Dans chaque chambre 15, 16, un ressort 17, 18 assure la pressurisation du fluide. Le nombre et le volume des chambres peuvent varier suivant l'application.

L'étanchéité est obtenue par des joints d'étanchéité évitant la fuite du fluide aux raccords ou par des membranes (caoutchouc renforcé par un tressage textile) déroulantes.

Le remplissage du fluide est assuré par un bouchon de remplissage étanche.

Le piston 1 peut bouger axialement, de sa position haute (en butée à droite) à sa position basse (en butée à gauche).

Les figures 4a à 4c expliquent les mouvements. Le mouvement du piston entraîne une variation de volume de fluide dans les 2 compartiments. La circulation à travers les mailles des coussins métalliques 21 et 22 et des perçages 4 du piston produit une perte de charge à l'origine de l'amortissement.

La figure 4a montre l'amortisseur en position équilibrée au montage. La précontrainte des coussins métalliques 21 et 22 permet d'assurer un rappel vers cette position.

La figure 4b montre le piston 1 venant en butée à droite (position haute), la flèche F₃ indique le sens de déplacement du fluide lors du mouvement vers la butée à droite.

La figure 4c montre le piston 1 venant en butée à gauche (position basse), la flèche F₄ indiquant le sens de déplacement du fluide. Dans cette position, le boulon 9 vient en butée sur le boîtier 10 et la région cylindrique 14 est engagée au maximum dans l'extrémité 61 de la rotule 6.

L'amortisseur selon l'invention est destiné à diminuer les efforts dynamiques vus par la structure d'une machine en fonctionnement. Cette machine peut être :
- un moteur aéronautique ou spatial. L'amortisseur est alors placé entre des éléments structurels en mouvement dynamique l'un par rapport à l'autre, et le but est de diminuer les contraintes à l'encastrement de ces éléments.
- un rotor d'hélicoptère. L'amortisseur est placé entre deux manchons de pales, ou entre le moyeu du rotor et le manchon de pale. Le but est de diminuer le mouvement relatif d'une pale par rapport à l'autre, notamment le mouvement de traînée.

L'amortisseur peut aussi être destiné à diminuer la transmission de vibrations, en provenance :
- d'une machine vibrante dans un établissement industriel type compresseur, broyeur, groupe électrogène motoventilateur, etc... On cherche alors à isoler la machine du sol, pour protéger hommes et équipements autour de la machine source
- d'un moteur de véhicule automobile, bus, poids lourd. On cherche alors à isoler le plancher et améliorer le confort des passagers, ou de protéger le reste des équipements du véhicule
- un équipement ou un moteur sur un train ou un navire. On cherche alors à isoler le plancher et améliorer le confort des passagers, ou de protéger le reste des équipements du train ou du navire.

L'amortisseur peut aussi être destiné à isoler des vibrations extérieures des équipements fragiles ou voués à des mesures précises, comme par exemple des équipements :
- de contrôle ou de détection
- optiques ou optroniques
- informatiques

Ce système peut être utilisé dans d'autres conditions et dans toute autre application nécessitant un amortissement de vibrations.

## Revendications

1. Amortisseur de vibrations comportant:
- un boîtier (10) délimitant une chambre annulaire (11)
- un piston (1) présentant une couronne centrale (2) coulissant dans la chambre annulaire (11), laquelle a un contour externe de diamètre supérieur ou sensiblement égal au diamètre extérieur de la couronne centrale (2) de sorte que la chambre annulaire (11) est séparée en un premier (111) et un deuxième (11₂) compartiments,
- deux éléments d'assemblage disposés aux extrémités opposées du piston, un premier élément d'assemblage (6) étant solidaire du boîtier (10) et un deuxième élément d'assemblage (7) étant solidaire du piston (1). **caractérisé par**
- lesdits compartiments (11₁, 11₂) étant remplis chacun par au moins un coussin métallique (21, 22) en fil tricoté, ces éléments constituant les éléments d'amortissement de l'amortisseur
- un fluide d'amortissement remplissant la chambre annulaire (11), y compris les interstices entre les mailles du ou des coussins métalliques (21, 22).

2. Amortisseur de vibrations selon la revendication 1, **caractérisé en ce que** la couronne centrale (2) présente au moins un trou traversant (4) pour le passage du fluide d'amortissement.

3. Amortisseur de vibrations selon une des revendications 1 ou 2, **caractérisé en ce qu'**au moins un élément d'assemblage est une rotule (6, 7).

4. Amortisseur de vibrations selon la revendication 3, **caractérisé en ce que** ladite rotule (6, 7) est une rotule métallique.

5. Amortisseur de vibrations selon la revendication 3, **caractérisé en ce que** ladite rotule (6, 7) est une rotule lamifiée.

6. Amortisseur de vibrations selon une des revendications précédentes, **caractérisé en ce que** les coussins métalliques (21, 22) ont à l'état libre, un diamètre intérieur d compris entre 10 mm et 25 mm, un diamètre extérieur D compris entre 30 mm et 50 mm et une hauteur H comprise entre 10 mm et 20 mm.

7. Amortisseur de vibrations selon une des revendications précédentes, **caractérisé en ce que** les coussins métalliques (21, 22) sont précontraints axialement.

8. Amortisseur de vibrations selon la revendication 7, **caractérisé en ce que** la précontrainte ΔH/H, ΔH désignant l'écrasement du ou des coussins métalliques (21, 22) dû à la précontrainte est compris entre 10 % et 50 %.

9. Amortisseur de vibrations selon une des revendications précédentes, **caractérisé en ce que** le fil tricoté a un diamètre compris entre 0,05 mm et 0,4 mm.

10. Amortisseur de vibrations selon une des revendications précédentes, **caractérisé en ce que** la densité du ou des coussins métalliques (21, 22) est comprise entre 0,2 et 3.

11. Amortisseur de vibrations selon une des revendications précédentes, **caractérisé en ce que** le fluide d'amortissement est de l'huile silicone.

12. Amortisseur de vibrations selon une des revendications 1 à 10, **caractérisé en ce que** le fluide d'amortissement est de l'eau glycolée.

13. Amortisseur de vibrations selon une des revendications précédentes, **caractérisé en ce qu'**il comporte au moins une chambre de compensation (15, 16) assurant une pressurisation du fluide à l'aide d'un élément élastique (17, 18).

## Claims

1. vibration damper, including:
- a casing (10) delimiting an annular chamber (11)
- a piston (1) having a central ring (2) sliding in the annular chamber (11), which has an external contour of diameter greater than or substantially equal to the outside diameter of the central ring (2) so that the annular chamber (11) is divided into a first compartment (11₁) and a second compartment (11₂),
- two assembly elements disposed at the opposite ends of the piston, a first assembly element (6) being attached to the casing (10) and a second assembly element (7) being attached to the piston (1),
**characterized in that**
- said compartments (11₁, 11₂) each being filled by at least one knitted wire metal cushion (21, 22), these elements constituting the damping elements of the damper,
- a damping fluid filling the annular chamber (11), including the interstices between the meshes of the metal cushion(s) (21, 22).

2. Vibration damper according to Claim 1, **characterized in that** the central ring (2) has at least one hole (4) through it for the damping fluid to pass through.

3. Vibration damper according to one of Claims 1 or 2, **characterized in that** at least one assembly element is a ball joint (6, 7).

4. Vibration damper according to Claim 3, **characterized in that** said ball joint (6, 7) is a metal ball joint.

5. Vibration damper according to Claim 3, **characterized in that** said ball joint (6, 7) is a laminated ball joint.

6. Vibration damper according to one of the preceding claims, **characterized in that** the metal cushions (21, 22) have in the unstressed state an inside diameter d between 10 mm and 25 mm, an outside diameter D between 30 mm and 50 mm, and a height H between 10 mm and 20 mm.

7. Vibration damper according to one of the preceding claims, **characterized in that** the metal cushions (21, 22) are prestressed axially.

8. Vibration damper according to Claim 7, **characterized in that** the prestressing ΔH/H, where ΔH designates the crushing of the metal cushion(s) (21, 22) resulting from the prestressing, is between 10% and 50%.

9. Vibration damper according to one of the preceding claims, **characterized in that** the knitted wire has a diameter between 0.05 mm and 0.4 mm.

10. Vibration damper according to one of the preceding claims, **characterized in that** the relative density of the metal cushion(s) (21, 22) is between 0.2 and 3.

11. Vibration damper according to one of the preceding claims, **characterized in that** the damping fluid is silicone oil.

12. Vibration damper according to one of Claims 1 to 10, **characterized in that** the damping fluid is water containing glycol.

13. Vibration damper according to one of the preceding claims, **characterized in that** it includes at least one compensation chamber (15, 16) for pressurizing the fluid by means of an elastic element (17, 18).

## Patentansprüche

1. Vibrationsdämpfer mit:
- einem Gehäuse (10), das eine Ringkammer (11) begrenzt,
- einem Kolben (1) mit einem mittleren Kranz (2), der in der Ringkammer (11) gleitet, welche eine Außenkontur mit einem Durchmesser aufweist, der größer ist als der Außendurchmesser des mittleren Kranzes (2) oder diesem im Wesentlichen entspricht, so dass die Ringkammer (11) in einen ersten (11₁) und einen zweiten Raum (11₂) geteilt ist,
- zwei Verbindungselementen, die an den entgegengesetzten Enden des Kolbens angeordnet sind, wobei ein erstes Verbindungselement (6) mit dem Gehäuse (10) und ein zweites Verbindungselement (7) mit dem Kolben (1) fest verbunden ist,
**dadurch gekennzeichnet, dass**
- die Räume (11₁, 11₂) jeweils mit mindestens einem Metallkissen (21, 22) aus gestricktem Draht gefüllt sind, wobei diese Elemente die Dämpfungselemente des Dämpfers bilden,
- ein Dämpfungsfluid die Ringkammer (11) einschließlich der Spalte zwischen den Maschen des oder der Metallkissen (21, 22) füllt.

2. Vibrationsdämpfer nach Anspruch 1, **dadurch gekennzeichnet, dass** der mittlere Kranz (2) mindestens eine Durchgangsöffnung (4) für das Durchströmen des Dämpfungsfluids aufweist.

3. Vibrationsdämpfer nach einem der Ansprüche 1 oder 2, **dadurch gekennzeichnet, dass** mindestens ein Verbindungselement ein Kugelgelenk (6, 7) ist.

4. Vibrationsdämpfer nach Anspruch 3, **dadurch gekennzeichnet, dass** das Kugelgelenk (6, 7) ein Metallkugelgelenk ist.

5. Vibrationsdämpfer nach Anspruch 3, **dadurch gekennzeichnet, dass** das Kugelgelenk (6, 7) ein laminiertes Kugelgelenk ist.

6. Vibrationsdämpfer nach einem der vorhergehenden Ansprüche, **dadurch gekennzeichnet, dass** die Metallkissen (21, 22) im freien Zustand einen Innendurchmesser d zwischen 10 mm und 25 mm, einen Außendurchmesser D zwischen 30 mm und 50 mm und eine Höhe H zwischen 10 mm und 20 mm haben.

7. Vibrationsdämpfer nach einem der vorhergehenden Ansprüche, **dadurch gekennzeichnet, dass** die Metallkissen (21, 22) axial vorgespannt sind.

8. Vibrationsdämpfer nach Anspruch 7, **dadurch gekennzeichnet, dass** die Vorspannung ΔH/H zwischen 10 % und 50 % beträgt, wobei ΔH die vorspannungsbedingte Stauchung des oder der Metallkissen (21, 22) bezeichnet.

9. Vibrationsdämpfer nach einem der vorhergehenden Ansprüche, **dadurch gekennzeichnet, dass** der gestrickte Draht einen Durchmesser zwischen 0,05 mm und 0,4 mm hat.

10. Vibrationsdämpfer nach einem der vorhergehenden Ansprüche, **dadurch gekennzeichnet, dass** die Dichte des oder der Metallkissen (21, 22) zwischen 0,2 und 3 beträgt.

11. Vibrationsdämpfer nach einem der vorhergehenden Ansprüche, **dadurch gekennzeichnet, dass** das Dämpfungsfluid Silikonöl ist.

12. Vibrationsdämpfer nach einem der Ansprüche 1 bis 10, **dadurch gekennzeichnet, dass** das Dämpfungsfluid glykolhaltiges Wasser ist.

13. Vibrationsdämpfer nach einem der vorhergehenden Ansprüche, **dadurch gekennzeichnet, dass** er mindestens eine Kompensationskammer (15, 16) aufweist, die eine Druckbeaufschlagung des Fluids mittels eines elastischen Elements (17, 18) gewährleistet.
